# EUROPEAN PATENT SPECIFICATION

(11) **EP 2 048 828 B1**
(45) Date of publication and mention of the grant of the patent: **30.11.2011**
(21) Application number: 07425639.7
(22) Date of filing: 12.10.2007
(51) Int. Cl.: H04L 12/46, H04L 12/66

(54) **Method and systems for data transmission over packet networks, corresponding computer program product**
Verfahren und Systeme für die Datenübertragung über Paketnetzwerke, entsprechendes Computerprogrammprodukt
Procédé et systèmes de transmission de données sur des réseaux de paquets, produit de programme informatique correspondant

(43) Date of publication of application: 15.04.2009
(73) Proprietor: Nokia Siemens Networks S.p.A., 20126 Milano (IT)
(72) Inventor: Aliotta, Mario, 20040 Roncello (IT); Rizzi, Pasquale Marco, 22073 Fino Mornasco (IT); Tomasetta, Annalisa, 23899 Robbiate (IT)
(74) Representative: Fischer, Michael

(56) References cited:
- WO-A-03/103241
- US-B1- 7 170 856
- US-B1- 7 228 358

## Description

### Field of the invention

The invention relates to data transmission over packet networks.

### Description of the related art

Ethernet and IP (Internet Protocol) networks are increasingly replacing PDH (Plesiochronous Digital Hierarchy) in many areas of data transport. As a consequence, the problem of carrying over an IP network legacy E1 "lines" (i.e. 2.048Mbps data flows) has been widely studied and addressed by standardization bodies such as IETF.

So far, issues related to transporting a single E1 or a fractional E1 have been addressed. The problem of transporting multiple E1s over packet networks (IP, Ethernet, MPLS) is currently unsolved. An approach allows transporting multiple E1s only by setting up multiple packet connections (for example different UDP/IP streams on different ports).This is not satisfactory because it adds to hardware complexity in gateway nodes that perform encapsulation and drains resources. With some packet protocols, creating multiple separated connections between the same endpoints becomes overly complicated. Also, having multiple connections increases overhead and adversely affects jitter performance.

The document US 1,170,856B1 describes a circuit emulation service, where a jitter buffer plays data at a constant bit rate adjusted to the speed with which the data are coming from the packet data network.

The document WO 03/103241A1 describes a method for encapsulating cells, where the rate, with which the cells are encapsulated, is adpated to the jitter with which the cells are received for encapsulation.

### Object and summary of the invention

The object of the invention is thus to dispense with the intrinsic drawbacks of the arrangements considered in the foregoing.

According to the invention, that object is achieved by means of a method having the features set forth in the claims that follow. The invention also relates to corresponding systems (e.g. the TX and RX sides in a node in a packet network) as well as a corresponding computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

The claims are an integral part of the disclosure of the invention provided herein.

An embodiment of the invention provides for creating a N x E1 aggregate with stuffing bytes and signalling embedded and transferring this aggregate in the place of a single E1 over a slightly modified version of CESoP (Circuit Emulation Service over Packet). This enables transport of even a large number of E1s with reduced overhead and better jitter performance by transporting multiple E1 aggregate with embedded stuffing for clock rate adaptation of asynchronous E1s.

An embodiment of the invention provides E1 transport over a packet network by
a) in the encapsulation direction:
   - a1) aggregating multiple E1s into an aggregate by adapting clock of different and asynchronous E1s by stuffing bytes,
   - a2) optionally adding an aggregate overhead in addition to stuffing for aggregate signaling,
   - a3) fragmenting such aggregate stream into packets,
   - a4) optionally adding a packet overhead to packets for proper handling,
   - a5) adding a packet network header,
b) sending packets over the packet network, and
c) in the decapsulation direction:
   - c1) extracting an aggregate stream from packets processing packet and aggregate overhead if present,
   - c2) recovering the original E1s from the aggregate by removing the stuffing bytes.

In an embodiment, an aggregate is used comprising 34 bytes per each E1 per each 125 µs time frame, 32 bytes from original E1, 1 stuffing byte and 1 signalling byte.

In an embodiment, the aggregate overhead optionally includes the following fields: unique word, RDI, REI, payload capacity at the beginning and CRC at the end.

In an embodiment, a byte spreading of each E1 is obtained by writing E1s lines and reading columns.

In an embodiment, the aggregate stream is split into fixed length packets to be encapsulated into the packet transport protocol.

In an embodiment, the packet transport protocol is SATOP (Structure Agnostic TDM over Packet) according to RFC 4553, and an additional optional pointer is added to the SATOP header.

### Brief description of the annexed drawings

The invention will now be described, by way of example only, with reference to the enclosed figures of drawing, wherein:
- Figure 1 is a schematic representation of a payload arrangement for transmission over a packet network,
- Figure 2 is a detailed representation of overhead structure for use in the arrangement described herein, and
- Figure 3 further details the setting-up of an aggregate frame in the arrangement described herein.

### Detailed description of preferred embodiments

The following is a detailed description of an exemplary embodiment of an arrangement for transporting a plurality of (e.g. 64) E1 data flows over a packet network of any known type such as a IP, Ethernet or MPLS (MultiProtocol Label Switching) network.

In the exemplary embodiment considered, each PDU (Packet Data Unit) #1 to #64 consists of 34 bytes sent every 125 µs (2176 kbit/s): 32 bytes for the incoming E1 tributary, 1 byte for justification and stuffing bits and the last byte for CRC (Cyclic Redundancy Code), Ring information and AIS (Alarm Indication Signal)notification.

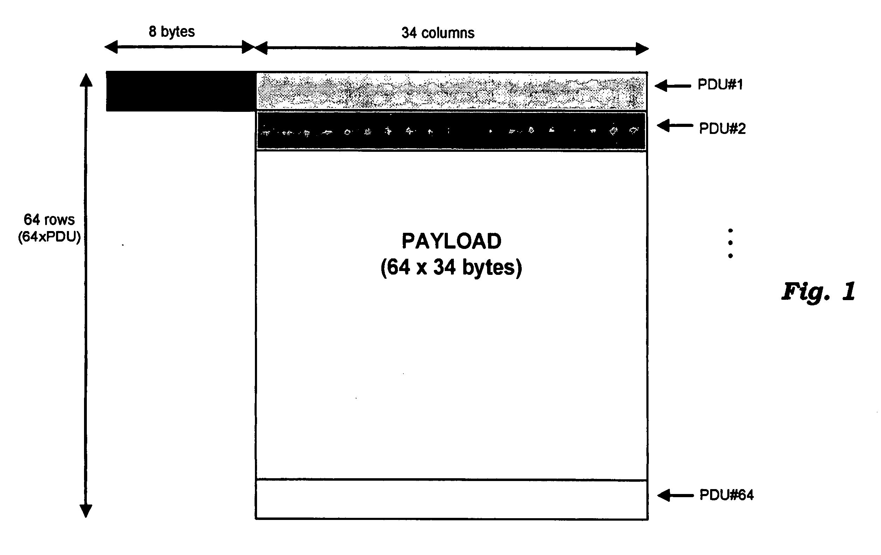

A framer block of any known type may be responsible for the construction, every 125 µs, of the aggregate frame, whose structure is depicted in figure 1. The length of the aggregate frame is 2184 bytes and includes an 8-byte overhead plus a 2176-byte corresponding to 64 PDUs.

Since the duration of every aggregate frame is 125 µs, the resulting rate is 139.776 Mbit/s.

In the exemplary embodiment shown, the payload size is fixed to 64 rows x 34 columns, since the maximum number of Packet Data Units entering the Framer block is 64. Therefore, according to the number N of E1 tributaries and to the E1 line positions enabled (among all the 64 possible), the associated PDUs are mapped onto the corresponding rows of the payload matrix; the other (N-64) rows are filled with padding bytes.

For example, if a 4xEl data flow enters the IDU (Interface Data Unit) in the enabled lines 1, 3, 5 and 10, the aggregate frame will contain the PDUs derived from the four E1 tributaries in the first, third, fifth and tenth rows. The other 60 rows are filled with padding bytes.

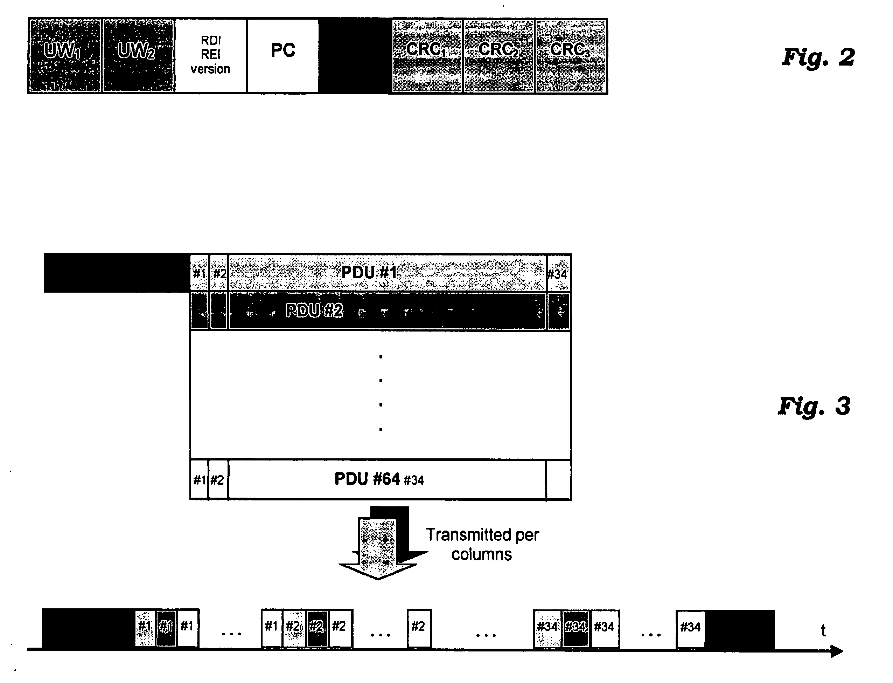

The overhead structure as depicted in figure 2 may comprise 8 bytes arranged as follows:
- Unique Word (UW1, UW2): 2 bytes in every aggregate frame used to allow frame alignment during reception, before payload processing;
- RDI, REI, version: 2 bits used to return to the remote transmitter end an alarm indication associated with the local receiving chain. The RDI (Remote Defect Indication) alarm may be active when the receiving chain is under failure. The REI (Remote Error Indication) may be active when there is performance degradation on the received signal, that is when the received signal has a BER (Bit Error Rate) greater than a given (configurable) threshold. The version (6 bits) may indicate the current overhead type;
- Payload Capacity (PC): this may indicate the capacity carried in the aggregate frame as expressed in number of E1 tributaries. As indicated previously, the payload size may be fixed so that the PC value may be equal to e.g. 64;
   For Future Use (FFU): 1 byte for possible future use;
   CRC1, CRC2, CRC3: CRC calculated on the aggregate signal to provide performance monitoring on it.

Figure 3 shows an exemplary set-up of an aggregate frame built per rows and transmitted per columns towards the "Time Division Multiplexing over Ethernet (TDMoE) encapsulation", as illustrated below.

A CRC may be transmitted at the end of the aggregate frame (referred to a previous frame) and calculated step-by-step over the entire payload.

In an embodiment, in the receiver (RX) direction, a de-framer block of any know type receives the aggregate frame, finds the starting of the frame (i.e. UW₁ and UW₂) and recovers the actual N Packet Data Units (discarding the padding bytes) that are then sent to the De-mapper block.

In addition, for a more general asynchronous handling of aggregate stream in intermediate nodes, a justification byte (opportunity) may be added, in a manner known per se, to the aggregate.

The continuous stream thus generated may be partitioned into byte blocks of fixed lengths (e.g. 500 byte) called TDMoE PDU, to which a SATOP control word and an optional aggregate pointer is added before encapsulation into standard packet frames such as Ethernet, MPLS, VLAN (Virtual Local Area Network) or IP frames.

An aggregate pointer (2 bytes) may be used to identify the beginning of the aggregate frame within the packet thus reducing the frame alignment time.

Without prejudice to the underlying principle of the invention, the details and the embodiments may vary, even appreciably, with reference to what has been described by way of example only, without departing from the scope of the invention as defined by the annexed claims.

## Claims

1. A method of transporting over a packet network multiple different and asynchronous E1 Plesiochronous Digital Heriarchy (PDH) data flows having respective clocks, the method including the steps of:
- encapsulating said multiple E1 data flows in an aggregate stream by adapting said respective clocks by means of stuffing bytes,
- fragmenting said aggregate stream into packets,
- transporting said packets over said packet network,
- extracting said aggregate stream from said packets transported over said packet network, and
- decapsulating said multiple E1 data flows from said aggregate stream extracted from said packets transported over said packet network by removing said stuffing bytes, thus recovering said multiple E1 data flows.

2. The method of claim 1, including the step of adding to said aggregate stream an aggregate overhead for aggregate signaling.

3. The method of either of claims 1 or 2, including the step of adding a packet overhead to said packets for transportation over said packet network.

4. The method of any of claims 1 to 3, including the steps of fragmenting said aggregate stream into packets and adding thereto a packet network header for transportation over said packet network.

5. The method of any of the preceding claims, wherein said aggregate stream comprises 34 bytes per each said E1 data flow per each 125 µs time frame, 32 bytes from the original E1 data flow, 1 stuffing byte and 1 signalling byte.

6. The method of claim 2, wherein said aggregate overhead optionally includes fields selected out of: Unique Word, Remote Defect Indication, Remote Error Indication, payload capacity, Cyclic Redundancy Code.

7. The method of any of the previous claims including a byte spreading of each said E1 data flow by writing E1 data lines and reading columns.

8. The method of any of the previous claims including the step of splitting said aggregate stream into fixed length packets.

9. The method of any of the previous claims including the step of using SATOP (Structure Agnostic TDM over Packet) as the protocol for transporting said packets over said packet network.

10. The method of claim 9, including the step adding a pointer to the header of said SATOP protocol.

11. A node in a packet network, configured for performing all the steps of encapsulating and fragmenting in the method of any of claims 1 to 10, respectively, said node being connected to a further node, configured for performing all the steps of extracting and decapsulating in the method of any of the claims 1 to 10, respectively.

12. A node in a packet network, configured for performing all the steps of extracting and decapsulating in the method of any of claims 1 to 10, respectively, said node being connected to a further node, configured for performing all the steps of encapsulating and fragmenting in the method of any of the claims 1 to 10, respectively.

13. A computer program product, loadable in the memory of at least one computer and including software code portions for performing the steps of the method of any of claims 1 to 10.

## Patentansprüche

1. Verfahren zum Transportieren mehrerer verschiedener und asynchroner Datenflüsse der E1 Plesiochronous Digital Hierarchy (PDH), die jeweilige Takte aufweisen, über ein Paketnetzwerk, wobei das Verfahren die folgenden Schritte umfasst:
- Einkapseln der mehreren E1-Datenflüsse in einen Aggregatstrom durch Anpassen der jeweiligen Takte mittels Stopfbyte,
- Fragmentieren des Aggregatstroms in Pakete,
- Transportieren der Pakete über das Paketnetzwerk,
- Extrahieren des Aggregatstroms aus den über das Paketnetzwerk transportierten Paketen und
- Entkapseln der mehreren E1-Datenflüsse aus dem aus den über das Paketnetzwerk transportierten Paketen extrahierten Aggregatstrom durch Entfernen der Stopfbyte, um **dadurch** die mehreren E1-Datenflüsse wiederzugewinnen.

2. Verfahren nach Anspruch 1 mit dem Schritt des Hinzufügens eines Aggregat-Overhead zu dem Aggregatstrom zur Aggregat-Signalisierung.

3. Verfahren nach einem der Ansprüche 1 oder 2 mit dem Schritt des Hinzufügens eines Paket-Overhead zu Paketen zum Transport über das Paketnetzwerk.

4. Verfahren nach einem der Ansprüche 1 bis 3 mit den Schritten des Fragmentierens des Aggregatstroms in Pakete und des Hinzufügens eines Paketnetzwerk-Headers zu diesen zum Transport über das Paketnetzwerk.

5. Verfahren nach einem der vorhergehenden Ansprüche, wobei der Aggregatstrom für jeden E1-Datenfluss für jeden Zeitrahmen von 125 µs 34 Byte, 32 Byte aus dem ursprünglichen E1-Datenfluss, 1 Stopfbyte und 1 Signalisierungsbyte umfasst.

6. Verfahren nach Anspruch 2, wobei das Aggregat-Overhead wahlweise Felder umfasst, die aus Folgendem ausgewählt werden: Unique Word, Remote Defect Indication, Remote Error Indication, Nutzinformationskapazität, Cyclic Redundancy Code.

7. Verfahren nach einem der vorhergehenden Ansprüche, umfassend eine Bytespreizung jedes E1-Datenflusses durch Schreiben von E1-Datenleitungen und Lesen von Spalten.

8. Verfahren nach einem der vorhergehenden Ansprüche mit dem Schritt des Aufteilens des Aggregatstroms in Pakete fester Länge.

9. Verfahren nach einem der vorhergehenden Ansprüche mit dem Schritt des Verwendens von SATOP (Structure Agnostic TDM over Packet) als das Protokoll zum Transportieren der Pakete über das Paketnetzwerk.

10. Verfahren nach Anspruch 9 mit dem Schritt des Hinzufügens eines Zeigers zu dem Header des SATOP-Protokolls.

11. Knoten in einem Paketnetzwerk, der dafür ausgelegt ist, jeweils alle Schritte des Einkapselns und Fragmentierens in dem Verfahren nach einem der Ansprüche 1 bis 10 auszuführen, wobei der Knoten mit einem weiteren Knoten verbunden ist, der dafür ausgelegt ist, jeweils alle Schritte des Extrahierens und Entkapselns in dem Verfahren nach einem der Ansprüche 1 bis 10 auszuführen.

12. Knoten in einem Paketnetzwerk, der dafür ausgelegt ist, alle Schritte des Extrahierens und Entkapselns in dem Verfahren nach einem der Ansprüche 1 bis 10 auszuführen, wobei der Knoten mit einem weiteren Knoten verbunden ist, der dafür ausgelegt ist, jeweils alle Schritte des Einkapselns und Fragmentierens in dem Verfahren nach einem der Ansprüche 1 bis 10 auszuführen.

13. Computerprogrammprodukt, das in den Speicher mindestens eines Computers ladbar ist und Softwarecodeteile zum Ausführen der Schritte des Verfahrens nach einem der Ansprüche 1 bis 10 umfasst.

## Revendications

1. Un procédé de transport par l'intermédiaire d'un réseau à commutation de paquets de flux de données à hiérarchie numérique plésiochrone (PDH) E1 multiples, différents et asynchrones possédant des horloges respectives, le procédé comprenant les opérations suivantes :
- l'encapsulation desdits flux de données E1 multiples dans un train agrégé par l'adaptation desdites horloges respectives au moyen de bytes de bourrage,
- la fragmentation dudit train agrégé en paquets,
- le transport desdits paquets par l'intermédiaire dudit réseau à commutation de paquets,
- l'extraction dudit train agrégé desdits paquets transportés par l'intermédiaire dudit réseau à commutation de paquets, et
- la désencapsulation desdits flux de données E1 multiples dudit train agrégé extrait desdits paquets transportés par l'intermédiaire dudit réseau à commutation de paquets par la suppression desdits bytes de bourrage, et ainsi la récupération desdits flux de données E1 multiples.

2. Le procédé selon la revendication 1, comprenant l'opération d'ajout audit train agrégé d'un surdébit agrégé pour une signalisation agrégée.

3. Le procédé selon la revendication 1 ou 2, comprenant l'opération d'ajout d'un surdébit de paquets auxdits paquets pour un transport par l'intermédiaire dudit réseau à commutation de paquets.

4. Le procédé selon l'une quelconque des revendications 1 à 3, comprenant les opérations de fragmentation dudit train agrégé en paquets et l'ajout à celui-ci d'un en-tête de réseau à commutation de paquets pour un transport par l'intermédiaire dudit réseau à commutation de paquets.

5. Le procédé selon l'une quelconque des revendications précédentes, dans lequel ledit train agrégé comprend 34 bytes dans chacun desdits flux de données E1 dans chaque fenêtre temporelle de 125 µs, 32 bytes provenant du flux de données E1 d'origine, 1 byte de bourrage et 1 byte de signalisation.

6. Le procédé selon la revendication 2, dans lequel ledit surdébit agrégé comprend facultativement des champs sélectionnés parmi : mot unique, indication de défaut distant, indication d'erreur distante, capacité de charge utile, code de redondance cyclique.

7. Le procédé selon l'une quelconque des revendications précédentes comprenant un étalement de bytes de chacun desdits flux de données E1 par l'écriture de lignes de données E1 et la lecture de colonnes.

8. Le procédé selon l'une quelconque des revendications précédentes comprenant l'opération de division dudit train agrégé en paquets de longueur fixe.

9. Le procédé selon l'une quelconque des revendications précédentes comprenant l'opération d'utilisation de SATOP (Structure Agnostic TDM over Packet) en tant que protocole pour le transport desdits paquets par l'intermédiaire dudit réseau à commutation de paquets.

10. Le procédé selon la revendication 9, comprenant l'opération d'ajout d'un pointeur à l'en-tête dudit protocole SATOP.

11. Un noeud dans un réseau à commutation de paquets, configuré de façon à exécuter toutes les opérations d'encapsulation et de fragmentation du procédé selon l'une quelconque des revendications 1 à 10 respectivement, ledit noeud étant relié à un autre noeud configuré de façon à exécuter toutes les opérations d'extraction et de désencapsulation du procédé selon l'une quelconque des revendications 1 à 10 respectivement.

12. Un noeud dans un réseau à commutation de paquets, configuré de façon à exécuter toutes les opérations d'extraction et de désencapsulation du procédé selon l'une quelconque des revendications 1 à 10 respectivement, ledit noeud étant relié à un autre noeud configuré de façon à exécuter toutes les opérations d'encapsulation et de fragmentation du procédé selon l'une quelconque des revendications 1 à 10 respectivement.

13. Un programme informatique, chargeable dans la mémoire d'au moins un ordinateur et comprenant des parties de code logiciel destiné à exécuter les opérations du procédé selon l'une quelconque des revendications 1 à 10.
